# EUROPÄISCHE PATENTSCHRIFT

(11) **EP 3 032 132 B1**
(45) Veröffentlichungstag und Bekanntmachung des Hinweises auf die Patenterteilung: **14.06.2017**
(21) Anmeldenummer: 15199720.2
(22) Anmeldetag: 03.09.2012
(51) Int. Cl.: F16F 1/371, F16F 1/373, H02K 5/24, H02K 5/22

(54) **HALTERUNG ZUR BEFESTIGUNG EINES AGGREGATS, INSBESONDERE EINER PUMPE, AN EINEM KRAFTFAHRZEUG**
MOUNT FOR ATTACHING AN ASSEMBLY, IN PARTICULAR A PUMP, ON A MOTOR VEHICLE
FIXATION DESTINEE A FIXER UN AGREGAT, EN PARTICULIER UNE POMPE, SUR UN VEHICULE AUTOMOBILE

(30) Priorität: 02.11.2011 DE 102011085558
(43) Veröffentlichungstag der Anmeldung: 15.06.2016
(62) Teilanmeldung aus: 12755845.0
(73) Patentinhaber: ROBERT BOSCH GMBH, 70442 Stuttgart (DE)
(72) Erfinder: Hein, Bernd, 72270 Baiersbronn/Schoenmuenzach (DE); Riehl, Guenther, 77815 Buehl (DE); Kotlarski, Thomas, 77815 Buehl (DE); Mahfoudh, Samir, 77815 Buehl (DE)

(56) Entgegenhaltungen:
- EP-A2- 0 124 069
- DE-A1-102009 029 067
- GB-A- 2 030 377
- US-A1- 2010 032 544

## Beschreibung

### Stand der Technik

Die Erfindung betrifft eine Halterung zum Befestigen eines Aggregats, insbesondere einer Pumpe, an einem Kraftfahrzeug. Die Halterung weist ein ringförmiges Dämpfungselement auf, dessen Innenbereich zur Aufnahme des Aggregats vorgesehen ist. Außenseitig weist das Dämpfungselement ein blockförmiges Befestigungselement auf, dessen radial vom Zentrum des Dämpfungselements wegweisende Oberseite als Schnittstelle zum Kraftfahrzeug vorgesehen ist, wobei im Befestigungselement, unter der Oberseite, ein Einlegeteil mit einem plattenförmigen Zentralbereich angeordnet ist, das zur lokalen Versteifung des Dämpfungselements ausgelegt ist.

Halterungen dieser Art befinden sich bereits auf den Markt.

Bei der Konstruktion und Auslegung von Systemkomponenten, wie z.B. einer Kühlkreislaufpumpe für ein Kraftfahrzeug, sind die im Betrieb des Kraftfahrzeugs zu erwartenden dynamischen Belastungen insbesondere der Bauteile der Systemkomponenten, wie Leiterplatten und Pin-Verbindungen, eine Herausforderung für die Entwickler in Bezug auf Dauerhaltbarkeit. Oftmals führen die hohen Lastenheftanforderungen, die engen Bauräume und der Kostendruck zu einer Unterdimensionierung kritischer Bauteile, welche zum Versagen einer Einzelkomponente und somit auch des Aggregats führen können.

Beispielhaft seien hier Anforderungen an die Schüttelbelastbarkeit des Aggregats bei einem Anbau an einen Verbrennungsmotor des Kraftfahrzeuges genannt. Die daraus resultierenden dynamischen Beanspruchungen der Erzeugnisse liegen oft weit oberhalb der zulässigen Beanspruchbarkeit. Fehlende oder ungenügende Werkstoffdämpfungen verursachen oftmals bei Schüttelbelastungen kritische Resonanzfrequenzen mit bis zu 20-facher Überhöhung der Anregung und beeinträchtigen somit die gewünschte Lebensdauer des Erzeugnisses stark. Hierbei hängt die Übertragungsintensität der Schwingungsenergie vom Schwingungserreger, also dem Verbrennungsmotor, an das daran befestigte Erzeugnis bis hin zu den Einzelteilen stark von der Verbindungsart der Bauteile und deren Materialdämpfungen ab. Eine starre Halterung der Pumpe am Motor bedeutet eine ungedämpfte Übertragung der Anregungsenergie an die Pumpe und somit eine zu starke Belastung der Pumpe beziehungsweise ihrer Einzelkomponenten.

Die Lebensdauer eines Erzeugnisses ist umgekehrt proportional zu dessen Belastungen, wobei die Beanspruchungen mittels einer Dämpfung entscheidend minimiert werden können. Für eine elastische Halterung eignen sich hochdämpfende Elastomerpuffer, z.B. aus EPDM (Ethylen-Propylen-Dien-Kautschuk), welche die Schwingungsenergie absorbieren und diese in innere Reibung umwandeln; es entsteht Wärme, die der Elastomerwerkstoff nach außen abstrahlt.

Bei bekannten Halterungen wird das Dämpfungselement typischerweise als ein ringförmiges Halter-/Entkopplungselement zwischen dem Aggregat und dem Schwingungserreger montiert, vergleiche beispielsweise DE 10 2009 029 067 A1. Dies ist hinsichtlich Dämpfung eine effiziente Lösung, die jedoch aufgrund der geringen Steifigkeit des Elastomerhalters unerwünscht große Auslenkungen des Aggregats (insbesondere im niedrigen Frequenzbereich) verursacht und zu einer Kollision mit benachbarten Komponenten führen kann. Des Weiteren kann eine zu elastische Halterung z.B. durch die bei der Montage des Steckers an der Pumpe auftretenden Montagekräfte zu Ausweitungen beziehungsweise Verschiebungen der Pumpe führen, die eine anschließende Montage der Pumpe erschweren. Um die Gefahr eines Losrüttelns des Aggregats aus der Elastomerhalterung auszuschließen, ist im Übrigen oftmals ein zusätzliches ringförmiges Halteblech notwendig.

Bei der Auslegung einer Elastomerhalterung ist also darauf zu achten, dass auf der einen Seite eine Mindestdämpfung zur Entkopplung der Pumpe vorhanden sein muss und auf der anderen Seite eine maximale Auslenkung (abhängig vom Bauraum und Montagebedingungen) nicht überschritten werden darf. Grundsätzlich lässt sich dies beispielsweise durch eine geeignete Shorehärte der Elastomermischung oder durch ein Einlegeteil zur Versteifung des Elastomerhalters, vorzugsweise aus Stahl oder Duroplast, realisieren.

### Offenbarung der Erfindung

Es ist eine Aufgabe der Erfindung, eine verbesserte Halterung zur Befestigung eines Aggregats in einem Kraftfahrzeug anzugeben. Hierbei soll neben der mechanischen Entkopplung zwischen Verbrennungsmotor und Pumpe durch eine erhöhte Steifigkeit die Montagefähigkeit für weitere Aggregate an der Pumpe, wie beispielsweise einem elektrischen Stecker, unterstützt werden.

Die Aufgabe der Erfindung wird durch eine Halterung gemäß Patentanspruch 1 gelöst. Weitere Ausgestaltungen der Erfindung ergeben sich aus den Unteransprüchen und der Beschreibung.

Bei der erfindungsgemäßen Halterung weist das Einlegeteil an zwei gegenüberliegenden Rändern jeweils einen vorzugsweise schmalen und vorzugsweise schräg in das Dämpfungselement hineinlaufenden Flügel auf. Der Erfindung liegt die Idee zu Grunde, die Steifigkeit des Elastomerhalters gezielt ortsbezogen durch Vergrößerung beziehungsweise Verlängerung des Einlegeteils zu verstärken, jedoch durch geeignete geometrische Ausbildung der zusätzlichen Einlegeteilflächen als schmale Flügel einerseits den vorhandenen Bauchraum optimal auszunutzen und andererseits eine zu große Überdeckung des Elastomermaterials, welche die dämpfende Funktion beeinträchtigen würde, zu vermeiden. Die Verlängerung des Einlegeteils durch Flügel verbessert außerdem die Verankerung des Einlegeteils im Elastomer, so dass keine großen Relativbewegungen mehr möglich sind und somit keine Risse im Elastomermaterial auftreten.

Gemäß einer ersten Weiterbildung der Erfindung sind die Flügel annähernd mittig an den Rändern, insbesondere an den Längsseiten, des Einlegeteils angeordnet, damit die Flügel möglichst zentral im Elastomermaterial eingebettet sind und sich bei Montagevorgängen gegebenenfalls noch etwas im Elastomer verformen können.

Gemäß einer vorteilhaften Weiterbildung der Erfindung kann die im jeweiligen Anwendungsfall erforderliche Auslegung einer einen Kompromiss mit der geforderten Dämpfung wahrenden lokalen Mindeststeifigkeit des Dämpfungselements durch Wahl des Materials, des Querschnitts und der Länge der Flügel implementiert werden.

Bei einer hinsichtlich der Haftung zwischen Einlegeteil und Dämpfungselement als besonders vorteilhaft angesehenen weiteren Weiterbildung der Erfindung, bei der das Dämpfungselement aus einem Elastomer besteht, in dem das Einlegeteil durch Vulkanisierung eingeschlossen ist, weisen die Enden der Flügel jeweils eine Bohrung zur formschlüssigen Verbindung mit dem Elastomerwerkstoff auf.

Die Erfindung wird im Folgenden anhand von Ausführungsbeispielen näher beschrieben. Dabei zeigen
Figur 1 eine perspektivische Ansicht einer erfindungsgemäßen - noch nicht am Kraftfahrzeug montierten - Halterung mit Pumpe,
Figur 2 in gleicher Ansicht eine Halterung ohne Pumpe mit zusätzlicher Darstellung einer ersten erfindungsgemäßen Variante eines in der Halterung eingebetteten und dort nicht sichtbaren Einlegeteils,
Figur 3 in gleicher Darstellung eine Halterung mit einer zweiten erfindungsgemäßen Variante eines Einlegeteils,
Figur 4 eine perspektivische und weggebrochene Ansicht einer Halterung mit einem darin eingebetteten, teilweise erkennbaren Einlegeteil.

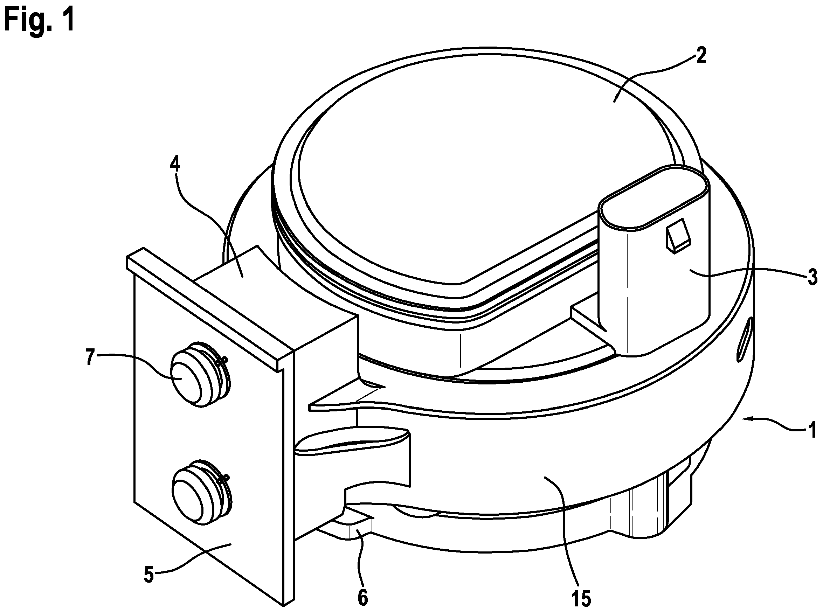

Figur 1 zeigt eine schematische Darstellung einer Halterung mit einem ringförmigen Dämpfungselement 1, in dessen Innenraum eine Kühlkreislaufpumpe 2 eingepresst ist. Die Pumpe 2 ist mit einem Stecker 3 für den elektrischen Anschluss versehen. Ein Bereich der Peripherie des Dämpfungselements 1 ist als blockförmig verstärktes Befestigungselement 4 ausgebildet, mit einer (hier verdeckten) zur Kundenschnittstelle 5 (beispielsweise Motoranbau) weisenden Oberseite 14. Zudem weist das Dämpfungselement 1 einen ringförmigen Teil 15 auf, der die Pumpe 2 umschließt. Zur mechanischen Stabilisierung des einstückig mit dem Dämpfungselement 1 verbundenen Befestigungselements 4 können, wie in Figur 1 und den weiteren Figuren erkennbar, Stützrippen 6 vorgesehen sein. Im Material des Dämpfungselements 1 beziehungsweise des Befestigungselementes 4 sind zwei Anschlussbolzen 7 verankert, die zur Herstellung einer Schraubverbindung mit dem Motoranbau 5 vorgesehen sind.

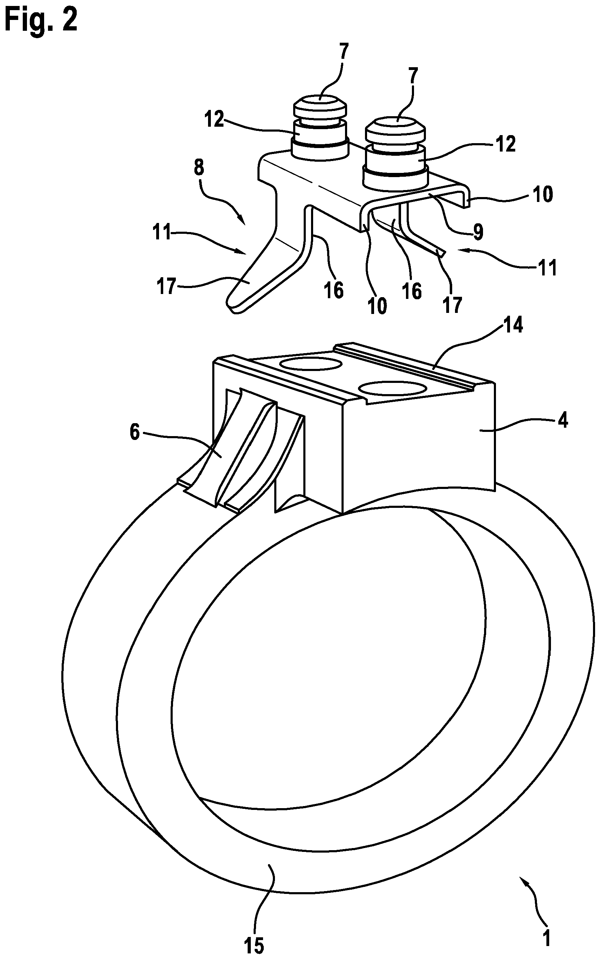

Um im Bereich des Befestigungselementes 4 eine gezielte Steifigkeit zur Reduzierung der Auslenkung des Elastomerhalters bei einer anschließenden Montage (Anschluss) des Steckers 3 zu erzeugen, ist im Befestigungselement 4 ein nicht sichtbares plattenförmiges Einlegeteil eingebettet, beispielsweise durch Einlegen eines derartigen Einlegeteils in ein Elastomer-Spritzwerkzeug und anschließendes Vulkanisieren. Zum besseren Verständnis ist in der Darstellung gemäß Figur 2, die das ringförmige Dämpfungselement 1 noch ohne Pumpe 2 zeigt, das Einlegeteil 8, wie es in Figur 1 im Befestigungselement 4 eingebettet ist, oberhalb der Oberseite 14 des Befestigungselements 4 dargestellt. Die dargestellte erste Variante des Einlegeteils 8 weist vorzugsweise einen U-förmigen Querschnitt mit kurzen, zur sicheren Verankerung im Befestigungselement 4 vorgesehenen Schenkeln 10 auf. Von jedem Schenkel 10 ragt jeweils ein schmaler Flügel 11 schräg ab, wobei bei der dargestellten ersten Variante die Spitzen der Flügel 11 jeweils angeschrägt verlaufen, was die Überdeckung des durch die Flügel 11 gestreckten Einlegeteils 8 doch wieder auf die geforderte Mindeststeifigkeit begrenzt. In dem dargestellten Beispiel ragen die Flügel 11 in einem ersten Abschnitt 16 parallel zu dem jeweiligen Schenkel 10 weg von dem Zentralbereich 9. Ein zweiter Abschnitt 17 der Flügel 11 ist in seitlicher Richtung weg von der Platte 9 abgewinkelt. Im montierten Zustand ist der erste Abschnitt 16 im Befestigungselement 4 und der zweite Abschnitt 17 im ringförmigen Teil 15 angeordnet. Freie Enden der Flügel 11 sind verjüngt in Richtung Enden ausgebildet. In der Ausführung der Fig. 2 ist die Breite der Flügel im Bereich von 20 % bis 50 % der Breite der Schenkel 10. Die Breite der Flügel kann auch kleiner oder größer sein. Das Einlegeteil 8 weist in seinem plattenförmigen Zentralbereich 9 ferner zwei Bohrungen sowie zwei Buchsen 12 für die Anschlussbolzen 7 auf.

Abhängig von der gewählten Ausführungsform kann auf die abgewinkelten Schenkel 10 verzichtet werden und die Flügel 11 ragen direkt aus dem Zentralbereich 9.

Neben dem Material haben der Querschnitt und die Länge der Flügel 11 des Einlegeteils 8 einen wesentlichen Einfluss auf seine Biege- beziehungsweise Torsionssteifigkeit. Mitbestimmend für die Flügellänge ist die für die Funktion der Pumpe 2 notwendige Dämpfung des Elastomerhalters. Im Allgemeinen gilt: je steifer der Elastomerhalter ist, desto geringer ist seine dämpfende Wirkung. Die Versteifung wird so ausgelegt, dass die Montage der Pumpe 2 im Elastomerhalter ohne drastische Verformung des Einlegeteils 8 ermöglicht wird. Eine permanente Verformung des Einlegeteils 8 bei der Montage der Pumpe könnte zur Beeinträchtigung der Pressverbindung zwischen Pumpe und Elastomerhalter und somit zum spielbehafteten Sitz der Pumpe 2 in der Elastomerhalterung führen.

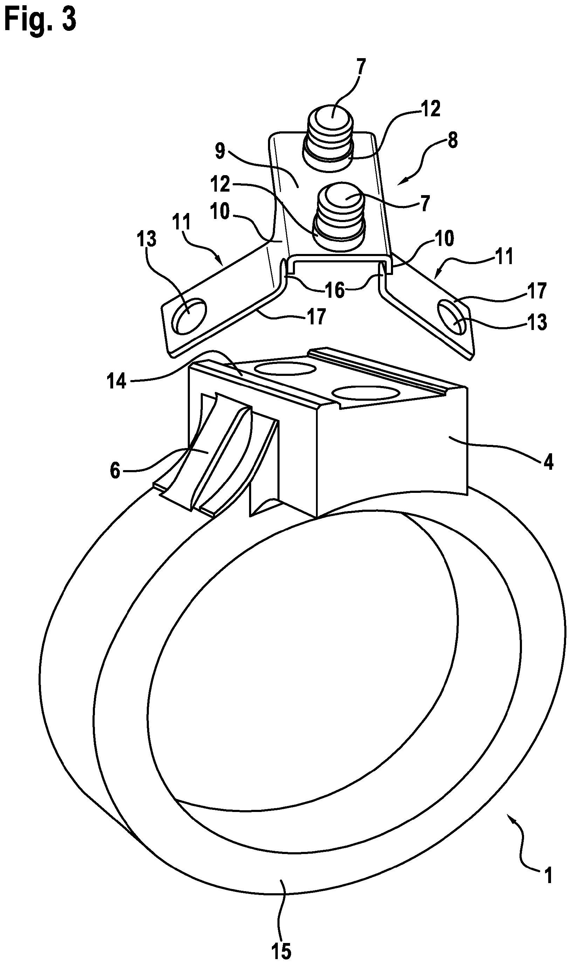

Figur 3 zeigt - oberhalb des Dämpfungselements 1 eine weitere Ausführungsform des Einlegeteils 8 - bei der die Flügel 11 rechteckig geformt sind und in ihrem Endbereich jeweils ein Loch 13 mit einem kreisförmigen Querschnitt aufweisen. Diese Löcher 13 dienen dazu, die Scheerbeanspruchung an der Schnittstelle Einlegeteil 8/Dämpfungselement 1 zu reduzieren und somit - durch eine formschlüssige Verbindung - die Haftung zwischen den beiden Komponenten zu erhöhen. Im montierten Zustand ist das Einlegeteil in das Dämfpungselement 1 eingebettet, wobei die ersten Abschnitte 16 der Flügel 11 im Befestigungselement 4 und die zweiten Abschitte 17 der Flügel 11 im ringförmigen Teil 15 eingebettet sind. Die Breite der Flügel 11 ist dabei 80 % der Breite der Schenkel 10. Die Breite der Flügel kann auch größer oder kleiner sein.

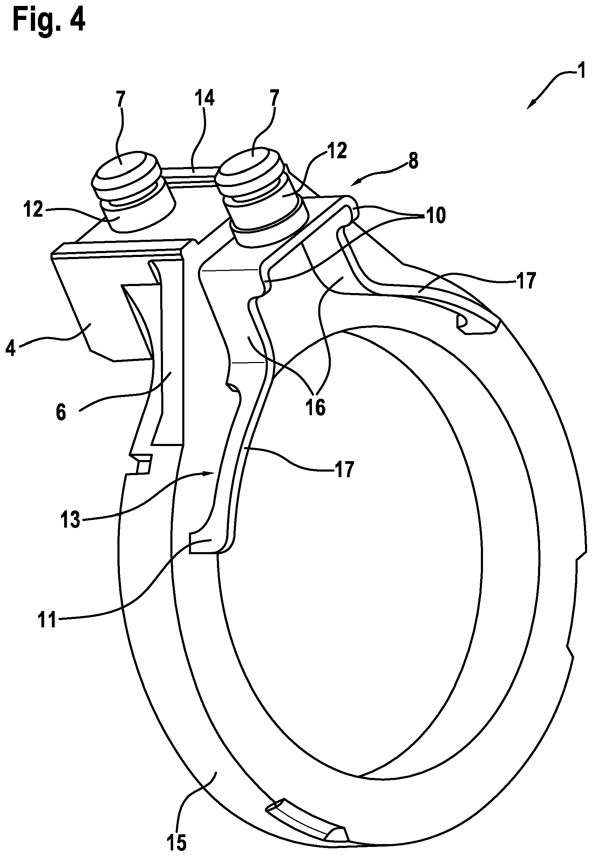

Figur 4 zeigt eine weitere Ausführungsform des Einlegeteils 8 im montierten Zustand in einer perspektivischen Teilschnittdarstellung mit halbiert dargestelltem Dämpfungselement 1. Diese Auführungsform des Einlegeteils entspricht im Wesentlichen der Ausführungsform der Figur 3, wobei jedoch die Löcher 13 als Langlöcher ausgebildet sind, die parallel zur Längsachse der zweiten Abschnitte 17 ausgerichtet sind. Dadurch wird eine verbesserte formschlüssige Verbindung zwischen dem Dämpfungselement 1 und dem Einlegeteil 8 erreicht. In der gezeigten Darstellung ist deutlich die Einbettung des ersten Abschnitts 16 im Befestigungselement 4 und die Einbettung des zweiten Abschnitts 17 im ringförmigen Teil erkennbar. Die Breite der Flügel 11 ist im Bereich von 80 % der Breite der Schenkel 10. Die Flügel 11 können auch schmaler oder breiter sein.

## Patentansprüche

1. Halterung zum Befestigen eines Aggregats (2), insbesondere einer Pumpe, an einem Kraftfahrzeug, mit einem ringförmigen Dämpfungselement (1), dessen Innenbereich zur Aufnahme des Aggregats (2) vorgesehen ist und das außenseitig ein Befestigungselement (4) aufweist, dessen radial vom Zentrum des Dämpfungselements (1) wegweisende Oberseite (14) als Schnittstelle (5) zum Kraftfahrzeug vorgesehen ist, wobei im Befestigungselement (4), ein Einlegeteil (8) angeordnet ist, das zur lokalen Versteifung des Dämpfungselements (1) ausgelegt ist, **dadurch gekennzeichnet, dass** das Einlegeteil (8) einen plattenförmigen Zentralbereich (9) aufweist und dass das Einlegeteil (8) an zwei gegenüberliegenden Rändern (10) jeweils einen in das Dämpfungselement (1) hineinlaufenden Flügel (11) aufweist.

2. Halterung nach Anspruch 1, **dadurch gekennzeichnet, dass** die Flügel (11) annähernd mittig an den Rändern (10), insbesondere an Längsseiten, des Einlegeteils (8) angeordnet sind.

3. Halterung nach Anspruch 1 oder 2, **dadurch gekennzeichnet, dass** das Material, der Querschnitt und die Länge der Flügel (11) zur lokalen Versteifung des Dämpfungselements (1) ausgelegt sind.

4. Halterung nach einem der Ansprüche 1 bis 3, **dadurch gekennzeichnet, dass** das Einlegeteil (8) aus Metall besteht.

5. Halterung nach einem der Ansprüche 1 bis 4, **dadurch gekennzeichnet, dass** das Dämpfungselement (1) aus einem Elastomer besteht, in dem das Einlegeteil (8), insbesondere durch Vulkanisierung eingebettet ist.

6. Halterung nach einem der Ansprüche 1 bis 5, **dadurch gekennzeichnet, dass** die Flügel (11) jeweils eine Bohrung (13) zur formschlüssigen Verbindung mit dem Dämpfungselement (1) aufweisen.

7. Halterung nach einem der Ansprüche 1 bis 6, **dadurch gekennzeichnet, dass** das Einlegeteil (8) mindestens eine Ausnehmung für einen im Dämpfungselement (1) verankerten Anschlussbolzen (7) aufweist, der aus der Oberseite (14) des Befestigungselementes (4) herausragt.

8. Halterung nach einem der Ansprüche 1 bis 7, **dadurch gekennzeichnet, dass** das Einlegeteil (8) einen U-förmigen Querschnitt mit zwei abgewinkelten Schenkeln (10) aufweist, wobei die beiden Schenkel (10) in das Befestigungselement (4) hineinragen, und wobei die Flügel (11) jeweils von den Schenkeln (10) abragen.

9. Halterung nach einem der Ansprüche 1 bis 8, **dadurch gekennzeichnet, dass** die Flügel (11) bis in einen ringförmigen Teil (15) des Dämpfungselements (1) ragen.

10. Halterung nach einem der Ansprüche 6 bis 9, **dadurch gekennzeichnet, dass** die Löcher (13) als Langlöcher ausgebildet sind, die in Richtung der Flügel (11) ausgerichtet sind.

## Claims

1. Retention member for securing a unit (2), in particular a pump, to a motor vehicle, having an annular damping element (1) whose inner region is provided for receiving the unit (2) and which has at the outer side a securing element (4) whose upper side (14) which is directed radially away from the center of the damping element (1) is provided as an interface (5) to the motor vehicle, there being arranged in the securing element (4) an insertion member (8) which is configured to locally reinforce the damping element (1), **characterized in that** the insertion member (8) has a plate-like central region (9) and **in that** the insertion member (8) has at each of the two opposing edges (10) a wing (11) which extends into the damping element (1).

2. Retention member according to Claim 1, **characterized in that** the wings (11) are arranged approximately centrally at the edges (10), in particular at longitudinal sides, of the insertion member (8).

3. Retention member according to Claim 1 or Claim 2, **characterized in that** the material, the cross-section and the length of the wings (11) are configured to locally reinforce the damping element (1).

4. Retention member according to one of Claims 1 to 3, **characterized in that** the insertion member (8) comprises metal.

5. Retention member according to one of Claims 1 to 4, **characterized in that** the damping element (1) comprises an elastomer material in which the insertion member (8) is embedded, in particular by means of vulcanization.

6. Retention member according to one of Claims 1 to 5, **characterized in that** the wings (11) each have a hole (13) for positive-locking connection to the damping element (1).

7. Retention member according to one of Claims 1 to 6, **characterized in that** the insertion member (8) has at least one recess for a connection pin (7) which is anchored in the damping element (1) and which protrudes from the upper side (14) of the securing element (4).

8. Retention member according to one of Claims 1 to 7, **characterized in that** the insertion member (8) has a U-shaped cross-section having two angled members (10), wherein the two members (10) protrude into the securing element (4), and wherein the wings (11) each protrude from the members (10).

9. Retention member according to one of Claims 1 to 8, **characterized in that** the wings (11) extend as far as a location in an annular portion (15) of the damping element (1).

10. Retention member according to one of Claims 6 to 9, **characterized in that** the holes (13) are constructed as elongate holes which are orientated in the direction of the wings (11).

## Revendications

1. Élément de retenue pour la fixation d'un organe (2), en particulier d'une pompe, à un véhicule automobile, comprenant un élément d'amortissement (1) de forme annulaire, dont la région intérieure est prévue pour recevoir l'organe (2) et qui présente du côté extérieur un élément de fixation (4) dont le côté supérieur (14) tourné radialement à l'opposé du centre de l'élément d'amortissement (1) est prévu en tant qu'interface (5) avec le véhicule automobile, une pièce d'insertion (8) étant disposée dans l'élément de fixation (4), laquelle est conçue pour rigidifier localement l'élément d'amortissement (1), **caractérisé en ce que** la pièce d'insertion (8) présente une région centrale (9) en forme de plaque et **en ce que** la pièce d'insertion (8) présente, au niveau de deux bords opposés (10), à chaque fois une aile (11) s'étendant à l'intérieur de l'élément d'amortissement (1).

2. Élément de retenue selon la revendication 1, **caractérisé en ce que** les ailes (11) sont disposées approximativement au centre au niveau des bords (10), en particulier au niveau des côtés longitudinaux de la pièce d'insertion (8).

3. Élément de retenue selon la revendication 1 ou 2, **caractérisé en ce que** le matériau, la section transversale et la longueur des ailes (11) sont conçus pour rigidifier localement l'élément d'amortissement (1).

4. Élément de retenue selon l'une quelconque des revendications 1 à 3, **caractérisé en ce que** la pièce d'insertion (8) est composée de métal.

5. Élément de retenue selon l'une quelconque des revendications 1 à 4, **caractérisé en ce que** l'élément d'amortissement (1) est constitué d'un élastomère dans lequel est encastrée la pièce d'insertion (8), en particulier par vulcanisation.

6. Élément de retenue selon l'une quelconque des revendications 1 à 5, **caractérisé en ce que** les ailes (11) présentent à chaque fois un alésage (13) pour la connexion par engagement par correspondance de formes avec l'élément d'amortissement (1).

7. Élément de retenue selon l'une quelconque des revendications 1 à 6, **caractérisé en ce que** la pièce d'insertion (8) présente au moins un évidement pour un boulon de raccordement (7) ancré dans l'élément d'amortissement (1), qui fait saillie hors du côté supérieur (14) de l'élément de fixation (4).

8. Élément de retenue selon l'une quelconque des revendications 1 à 7, **caractérisé en ce que** la pièce d'insertion (8) présente une section transversale en forme de U comprenant deux branches coudées (10), les deux branches (10) pénétrant dans l'élément de fixation (4), et les ailes (11) faisant saillie à chaque fois depuis les branches (10).

9. Élément de retenue selon l'une quelconque des revendications 1 à 8, **caractérisé en ce que** les ailes (11) pénètrent jusque dans une partie annulaire (15) de l'élément d'amortissement (1).

10. Élément de retenue selon l'une quelconque des revendications 6 à 9, **caractérisé en ce que** les trous (13) sont réalisés sous forme de trous oblongs qui sont orientés dans la direction des ailes (11).
